Europäisches Patentamt

European Patent Office

Office européen des brevets

(19)

(11) **EP 0 397 565 B2**

(12) # NOUVEAU FASCICULE DE BREVET EUROPEEN

(45) Date de publication et mention de la décision concernant l'opposition:
**25.03.1998 Bulletin 1998/13**

(51) Int Cl.6: **C22B 9/16**, C22B 9/02

(45) Mention de la délivrance du brevet:
**04.01.1995 Bulletin 1995/01**

(21) Numéro de dépôt: **90401234.1**

(22) Date de dépôt: **10.05.1990**

(54) **Procédé de refusion de matériaux métalliques avec décantation inclusionnaire**

Verfahren zum Abtrennen von Einschlüssen in Metallen durch Umschmelzen

Method for separation of inclusions in metals by remelting

(84) Etats contractants désignés:
**DE FR GB IT**

(30) Priorité: **11.05.1989 FR 8906173**

(43) Date de publication de la demande:
**14.11.1990 Bulletin 1990/46**

(73) Titulaire: **SOCIETE NATIONALE D'ETUDE ET DE CONSTRUCTION DE MOTEURS D'AVIATION, "S.N.E.C.M.A."**
**F-75015 Paris (FR)**

(72) Inventeurs:
 • **Ducrocq, Christian Antoine Bellanger**
  **F-95150 Taverny (FR)**
 • **Garnier, Marcel**
  **F-38410 Uriage (FR)**
 • **Lemaitre, Gérard**
  **F-92700 Colombes (FR)**
 • **Rivat, Pascal, Joseph**
  **F-38240 Meylan (FR)**
 • **Vernay, Pierre, Maurice**
  **F-38240 Meylan (FR)**

(74) Mandataire: **Berrou, Paul et al**
**S.N.E.C.M.A.**
**Service des Brevets**
**Boîte Postale 81**
**91003 Evry Cedex (FR)**

(56) Documents cités:
 EP-A- 0 017 588          EP-A- 0 234 536
 DE-A- 2 100 378          DE-A- 2 932 574
 DE-B- 2 011 795          FR-A- 2 073 331
 FR-A- 2 561 761          GB-A- 1 186 806
 US-A- 2 664 496          US-A- 3 775 091
 US-A- 4 723 996          US-A- 4 738 713

 • **P.G. Clites, "The Inductoslag Melting Process", 1982, United States Department of the Interior, Bureau of Mines, No. 673, p. 1-32**
 • **Donald J. Chronister et al, "Induction Melting of Titanium, Zirconium, and Reactive Alloys", AVS/ASM Proceedings of the 1986 Vacuum Metallurgy Conference, Pittsburgh, Pennsylvania (USA)**

EP 0 397 565 B2

**Description**

La présente invention concerne un procédé de décantation inclusionnaire de superalliages à base de nickel;

Les techniques habituellement utilisées actuellement pour l'élaboration de matériaux métalliques et plus particulièrement des superalliages à base de nickel font intervenir des opérations de fusion en creuset en matériau réfractaire de type céramique réalisées dans un four sous vide. Lors de cette opération il se produit une réaction métal/céramique d'où il résulte inévitablement la présence d'inclusions céramiques dans le matériau obtenu. Un affinage du métal devient par conséquent nécessaire à chaque fois que les conditions des applications imposent l'obtention d'un alliage dit super-propre et c'est notamment le cas pour les superalliages à base de nickel destiné à des applications aéronautiques, notamment à la fabrication de pièces de moteurs aéronautiques à turbine ou autres ensembles de propulsion. Il s'agit, par exemple, dans certains cas d'obtenir des lingots destinés à la production de poudres à base de nickel, en vue d'élaborer des pièces par des techniques connues en soi de métallurgie des poudres. Il est notamment reconnu que la présence d'inclusions dans de telles pièces est un facteur nocif pour leur tenue en service, notamment lorsque les pièces sont soumises à des sollicitations en fatigue oligocyclique.

Pour obtenir cet affinage du superalliage, diverses méthodes ont été envisagées au moyen d'une refusion du matériau en conditions propres de manière à assurer une séparation inclusionnaire.

On a ainsi utilisé un creuset refroidi où le superalliage sert de creuset de décantation au métal liquide, la fusion étant assurée au moyen d'un faisceau d'électrons ou par faisceau plasma.

Ces méthodes nécessitent toutefois une mise en oeuvre délicate dans des installations souvent très complexes et coûteuses. En outre. en fonction des applications envisagées. l'efficacité de la séparation inclusionnaire obtenue reste parfois insuffisante.

Pour répondre à ces problèmes sans encourir les inconvénients des solutions précédemment connues, l'invention prévoit une application des principes de la magnétohydrodynamique des métaux liquides.

Des exemples d'applications de ces principes, notamment par application d'un champ électromagnétique à une veine métallique liquide, ont été données par FR-A-2 316 026, FR-A-2 396 612. FR-A-2 397 251, FR-A-2 457 730 ou par EP-A-0 083 898.

Par ailleurs, FR-A-2 452 958 décrit un dispositif électromagnétique de séparation d'inclusions contenues dans un fluide électriquement conducteur dans lequel le champ magnétique alternatif réagit avec des courants extérieurs, induits dans une boucle de métal liquide. Des solutions de ce type ne peuvent toutefois pas être industriellement exploitées dans le cas de refusion de superalliages à base de nickel pour lesquels les températures de fusion sont supérieures à 1300°C et des conditions superpropres sont exigées.

Des dispositifs ou procédés. envisagés par exemple par FR-A-2 561 761 ou EP-A- 0 234 536, prévoient une évacuation des inclusions situées en haut d'un creuset froid. Ces dispositions se révèlent incompatibles avec des applications industrielles dans lesquelles l'alimentation en continu du métal refondre s'opère par le dessus du creuset.

Le procédé de décantation inclusionnaire conforme à l'invention et comportant une refusion en conditions propres, au moyen d'un creuset sectorisé en cuivre refroidi, d'un type dit creuset froid, assurée par induction électromagnétique sous vide propre permet une mise en oeuvre industrielle dans des conditions simplifiées et facilitées et une amélioration des résultats obtenus, sans les inconvénients précédemment rencontrés. Ledit procédé est caractérisé en ce que le domaine de fréquence du champ magnétique appliqué à la masse de métal en fusion dans le creuset est situé entre $5.10^3$ Hz et $5.10^5$ Hz de manière à assurer à la fois un brassage électromagnétique de la masse entière du métal liquide et une concentration en surface le long des parois froides de la masse à refondre de toutes les inclusions non conductrices constituées notamment des inclusions céramiques. obtenant ainsi une décantation inclusionnaire et en ce que les inclusions sont maintenues concentrées sur les parois froides de la masse à refondre jusqu'à l'évacuation du métal hors du creuset, les inclusions non-conductrices étant séparées de la masse métallique.

D'autres caractéristiques et avantages de l'invention seront mieux compris à la lecture de la description qui va suivre d'un mode de réalisation de l'invention, en référence aux dessins annexés sur lesquels :

- la figure 1 donne une représentation schématique des forces appliquées à une particule au sein d'une masse de métal refondu dans un creuset, selon le procédé de refusion conforme à l'invention ;
- la figure 2 représente, suivant une vue schématique en élévation et en coupe, un creuset droit destiné à la réalisation du procédé conforme à l'invention ;
- la figure 3 représente, suivant une vue schématique en élévation et en coupe, analogue à celle de la figure 2, un creuset de lévitation destiné à la réalisation du procédé conforme à l'invention,
- les figures 4a, 4b, 4c, 4d et 4e représentent les étapes successives de réalisation d'un essai dit de fusion par faisceau d'électrons et de solidification d'une éprouvette dite en bonton permettant de contrôler l'efficacité de la décantation inclusionnaire obtenue au moyen du procédé de refusion conforme à l'invention.

Le procédé de refusion d'alliages métalliques et plus particulièrement des superalliages à base de nickel conforme à l'invention intervient dans l'élaboration de ces alliages comme technique d'affinage et notamment en vue d'obtenir une séparation ou décantation des inclusions, notamment céramiques, présentes dans le matériau après une étape d'élaboration en creuset réfractaire. Cette opération de refusion est réalisée dans une installation, de type connu en soi, comportant notamment des moyens de mise sous vide assurant des conditions propres. Un creuset de type également connu est utilisé, du genre sectorisé en cuivre refroidi, dit creuset froid. La fusion de la masse métallique introduite dans le creusetest obtenue au moyen d'inducteurs électromagnétiques. Le procédé selon l'invention est remarquable par des conditions expérimentales spécifiques et un réglage optimalisé des paramètres, permettant seuls d'obtenir les résultats recherchés, à savoir une décantation inclusionnaire efficace.

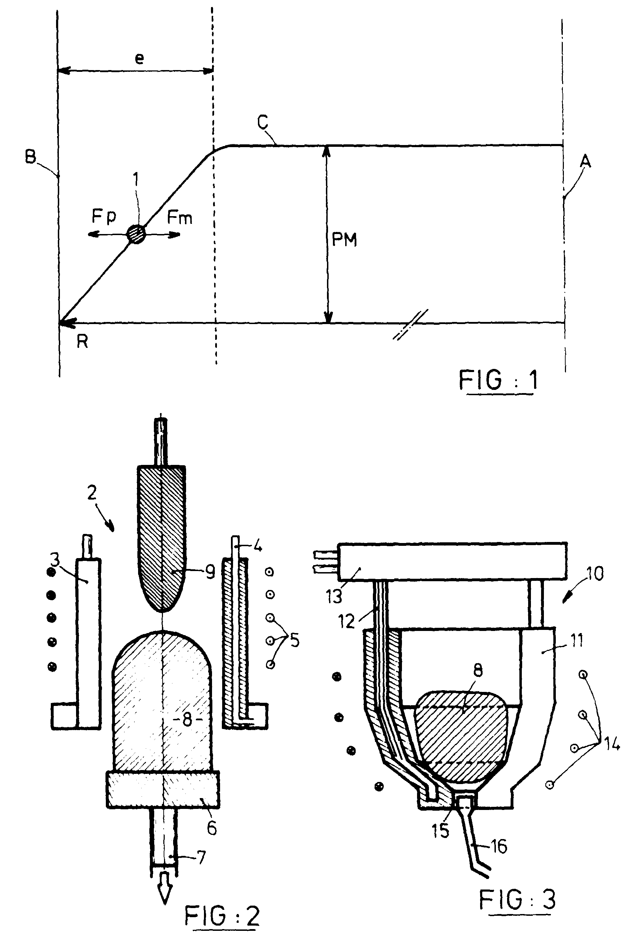

La figure 1 schématise la position d'une particule fluide 1 à l'intérieur de la masse de métal liquide vue dans un plan entre la ligne A figurant l'axe central du creuset et la ligne B, à une distance R de A, figurant la surface du métal liquide. Le champ magnétique appliqué développe, d'une part, des forces électromagnétiques de surface ou forces irrotationnelles dont l'effet se limite à une faible épaisseur, représentée par e sur la figure 1, qui est dite zone de peau électromagnétique. Ces forces de surface résultent de l'action combinée du champ magnétique alternatif appliqué avec celle de ses propres courants induits et ont pour effet de créer une pression magnétique dont la valeur, représentée par la courbe C sur la figure 1, croît de la périphérie du métal liquide jusqu'à sa valeur maximale PM obtenue à ladite épaisseur e. Dans cette zone de peau d'épaisseur e, la particule fluide 1, lorsqu'elle est constituée de métal liquide, est en équilibre sous l'action des forces électromagnétiques symbolisées par Fm et dirigées vers l'intérieur du domaine électroconducteur et sous l'action des forces de pression exercées sur la particule et symbolisées par Fp. Par contre, une particule non conductrice sera insensible aux forces électromagnétiques puisqu'aucun courant ne traverse la particule et se trouvera donc déportées vers la paroi du creuset, et la surface de la masse liquide sous l'effet des forces de pression;

D'autre part, sont également générées des forces électromagnétiques de volume ou forces rotationnelles qui mettent en mouvement le métal liquide et provoquent ainsi un brassage électromagnétique de cette masse. Ce brassage permet d'amener au sein de la masse de métal liquide toutes les inclusions vers la zone de peau électromagnétique à partir de laquelle, comme décrit ci-dessus, les forces de pression magnétique les déplacent vers la surface du métal liquide et vers la paroi du creuset froid. Toutes les particules non métalliques, notamment les inclusions céramiques sont ainsi soumises au cours de la refusion à la séparation ou décantation inclusionnaire et se trouvent concentrées le long des parois froides de la masse à refondre.

Une séparation efficace des inclusions est obtenue conformément à l'invention grâce à un choix remarquable de la valeur des paramètres qui conditionnent le résultat. En effet, cette efficacité est, d'une part, fonction des dimensions du creuset utilisé pour lesquelles on prendra le rayon R du creuset, du temps t de décantation et de la taille des inclusions, représentée par leur diamètre d en les assimilant à une sphère. Comme cela a été exposé ci-dessus, le déplacement des particules est dû aux forces électromagnétiques ou forces rotationnelles qui peuvent s'exprimer sous la forme :

$$f_1 = B^2 \pi d^3 / 6 \mu e,$$

où :

- e est l'épaisseur de peau électromagnétique précédemment définie,
- B est le champ magnétique,
- $\mu$ est la perméabilité magnétique.

Ce déplacement est par contre freiné par des forces de viscosité qui ont la forme :

$$f_2 = 3 \pi m v d V,$$

où :

- m est la masse volumique du liquide,
- v est la viscosité du liquide
- V est la vitesse de déplacement de l'inclusion.

A l'équilibre, les deux forces sont égales : $f_1 = f_2$ et on en déduit la vitesse de décantation :

$$V = B^2 / 18 \mu \ e. \ m. \ v.$$

La taille des inclusions déplaçables est ainsi limitée par un temps admissible de décantation. Une décantation absolue de toutes les inclusions imposerait un temps infini. Pour une base de temps admissible telle que t = R / V, la limite d obtenue est :

$$d = (18 \mu.e.m.v. \ R/B^2 t)^{1/2}$$

Il en résulte que le diamètre admissible d des inclusions diminue lorsque le temps t augmente ou lorsque B croît. Par contre, la taille des inclusions non décantées d augmente lorsque la taille du creuset R augmente ou la viscosité v du liquide croît.

D'autre part, l'efficacité de la décantation est également conditionnée par la fréquence du champ magnétique appliqué dont dépend le rapport des forces irrotationnelles aux forces rotationnelles. En effet une fréquence infinie correspond à une épaisseur de peau électromagnétique e nulle pour laquelle aucune décantation ne peut se produire. De même en champ continu ou fréquence nulle, il ne subsiste aucun effet. En conséquence, pour obtenir dans une installation industrielle les conditions de réalisation du procédé conforme à l'invention en assurant une efficacité satisfaisante de la décantation inclusionnaire, l'invention a délimité un domaine remarquable des fréquences du champ magnétique à appliquer dans les conditions qui ont été précisées ci-dessus.

On définit d'abord un rapport admissible entre l'épaisseur e de peau et le rayon R de volume liquide dans le creuset tel que l'épaisseur maximale $e_1$ soit égale audit rayon R et l'épaisseur minimale $e_2$ soit égale au centième de ce rayon R. En introduisant la relation $\mu\,\sigma\,\omega^2 e^2 = 2$ et les valeurs correspondantes du paramètre d'écran PE :

$$PE = R^2\,\mu\,\sigma\,\omega,$$

où :

- $\omega$ est la pulsation du champ magnétique,
- $\sigma$ est la conductivité électrique du matériau,
- R et $\mu$ comme précédemment.

On obtient ainsi les valeurs limites de PE

$$2 \leqq PE \leqq 500$$

On obtient ainsi compte-tenu des dimensions du creuset une plage théorique des fréquences, qui serait comprise entre une centaine de Hertz et plusieurs Mégahertz.

Dans des conditions industrielles, un critère d'efficacité (CE) de la décantation inclusionnaire peut être obtenu par le rapport des nombres Np de particules par kilogramme de matière présentes dans le métal, d'une part, avant et, d'autre part, après refusion selon le procédé conforme à l'invention :

$$CE = \frac{Np\ avant - Np\ après}{Np\ avant}$$

Si on adoptait ce critère d'efficacité il serait supérieur à 30%, dans le domaine des fréquences f du champ magnétique défini par : $50.Hz < f < 5 \times 10^6\,Hz$.

Un critère d'efficacité supérieur à 75% est obtenu dans le domaine optimal des fréquences suivant : $5.10^3 < f < 5.10^5\,Hz$.

Un tel domaine remarquable des fréquences f du champ magnétique appliqué dans les conditions décrites notamment en creuset froid et sous vide propre, caractérise par conséquent le procédé de refusion de superalliage à base de nickel conforme à l'invention.

Les essais de mise en oeuvre du procédé de refusion conforme à l'invention ayant permis de déterminer les domaines de frequences du champ magnétique à appliquer qui ont été définis ci-dessus ont été réalisés en utilisant deux types de creuset correspondant à deux modes de réalisation du procédé de refusion selon l'invention. Un premier creuset 2 représenté schématiquement sur la figure 2 comporte, de manière connue en soi, pour un creuset droit, des parois 3 en cuivre refroidies par des tubes internes 4 dans lesquels circule un fluide réfrigérant, notamment de l'eau. Les parois 3 sont extérieurement entourées de spires d'inducteur électromagnétique 5. La base du creuset 2 comporte une sole de tirage 6 associée à un système de tirage symbolisé en 7.

La charge 8 disposée dans ledit creuset 2 est alimentée en métal à refondre sous forme de lingot cylindrique 9 introduit dans la partie supérieure et le métal refondu affiné est tiré sous forme de lingots cylindriques dans la partie inférieure. Les paramètres appliqués, notamment les fréquences conformes à l'invention ainsi que les autres conditions choisies, notamment la puissance calorifique de l'installation et la vitesse de refusion sont telles que les inclusions non métalliques sont piégées dans les parties froides situées en périphérie du lingot. Après tirage, une opération supplémentaire d'usinage de la surface permet l'élimination des inclusions.

Un second creuset 10 représenté schématiquement sur la figure 3 est un creuset de lévitation d'un type connu en soi, dans lequel la géométrie particulière des parois 11 permet de maintenir la majeure partie du métal liquide en lévitation. Il comporte, comme précédemment, des tubes 12 de refroidissement internes auxdites parois 11 et alimentés par une boîte à eau 13 et des spires d'inducteur électromagnétique 14. Les inclusions sont à nouveau piégées dans les parties froides de métal en contact avec les parois du creuset refroidi. Par rapport à la solution à creuset droit de la figure 2, une surface plus faible des parties froides dans le présent cas est compensée par un temps de décantation plus long. Par contre, le creuset 10 permet, après séparation inclusionnaire dans les mêmes conditions précédemment décrites d'application des paramètres conformes à l'invention, d'évacuer le métal affiné par un orifice 15 ménagé à la partie inférieure du creuset 10 qui est masqué par un doigt refroidi 16 susceptible d'être escamoté.

Les inclusions séparées restent dans ce cas piégées dans le creuset de lévitation 10.
Un matériau propre est ainsi directement disponible à la sortie du creuset.

Une procédure d'essai a été utilisée pour évaluer le critère d'efficacité (CE) de la décantation inclusionnaire obtenue par le procédé de refusion conforme à l'invention dans son application aux superalliages à base de nickel. Pour réaliser l'essai, une poudre de superalliage à base de nickel de composition connue, ayant, par exemple une granulométrie de 75 micromètres et un point de fusion de 1350°C est mélangée à des particules de zircone, par répartition de 200 particules par kilogramme de poudre, les particules ayant une granulométrie comprise entre 120 et 150 micromètres et un point de fusion de 2800°C.

Le mélange de la poudre de superalliage et des particules de zircone de pollution volontaire est réalisé par un mouvement à tourbillons inversés de type Turbula pendant une heure. Une densification est ensuite effectuée par compaction isostatique à chaud ou par filage à chaud ; Les échantillons sont ensuite préparés spécifiquement pour les deux types de creuset.

Les conditions opératoires du procédé de refusion conforme à l'invention et notamment les paramètres remarquables définis par l'invention (fréquence du champ magnétique) sont appliquées à une opération de refusion d'un échantillon. Après maintien en fusion et décantation inclusionnaire conforme à l'invention. le métal liquide affiné soit coulé dans une lingotière en cuivre refroidi et un lingot est usiné. par exemple dans le mode de réalisation utilisé. au diamètre de 25 mm et hauteur de 90mm, soit tiré sous forme de lingot, par exemple dans le mode utilisé à un diamètre de 50 mm et une hauteur supérieure à 100 mm.

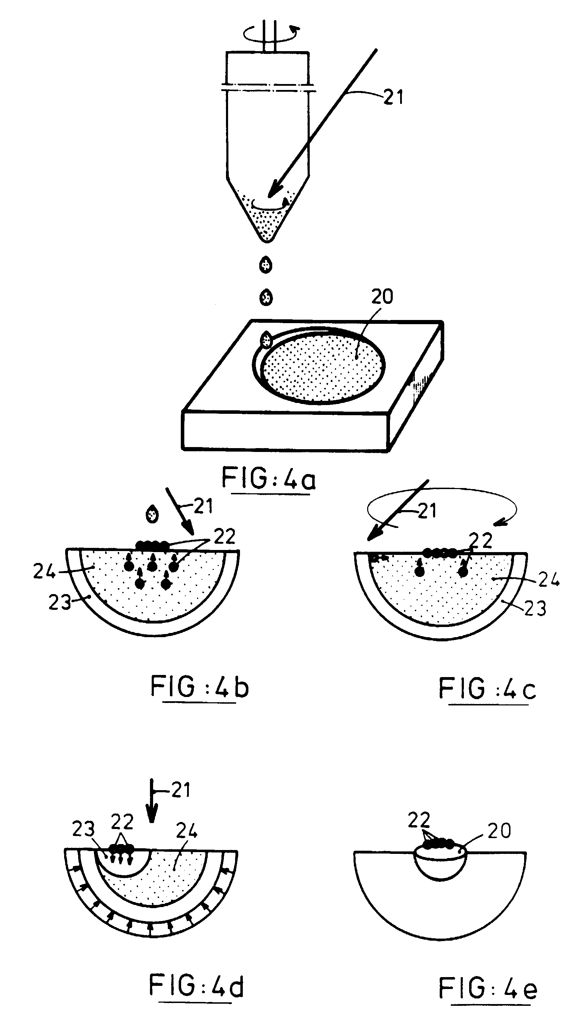

Les figures 4a. 4b. 4c. 4d. 4e représentent les étapes de l'essai qui est ensuite appliqué. dit test de propreté inclusionnaire du bouton à fusion par faisceau d'électrons. La figure 4a montre la fusion par faisceau d'électrons du lingot, et les différentes étapes de collection des inclusions aux figures 4b et 4c.

Les figures 4d et 4e schématisent les étapes de solidification lors du refroidissement sous vide du bouton. Les flèches 20 symbolisent le creuset refroidi dans lequel est réalisé le bouton. 21 de faisceau d'électrons ; les particules de pollution sont représentées en 22, le métal solide en 23 et le métal liquide en 24.

Les essais réalisés selon cette procédure ont donné les résultats suivants

- pour les fréquences f du champ magnétique telles que :

$$f < 50 \text{ Hz ou } f > 1.\,10^7 \text{ Hz,}$$

le critère d'efficacité précédemment défini a été observé inférieur à 30 %.
- pour le domaine de fréquences défini par l'invention,
un critère d'efficacité supérieur à 75 % est obtenu dans la plage optimale des fréquences:

$$5.10^3 < f < 5.10^5 \text{ Hz.}$$

## Revendications

1. Procédé de refusion de superalliages à base de nickel, la fusion des superalliages placés dans un creuset sectorisé en cuivre refroidi dit creuset froid étant réalisée sous vide propre au moyen d'inducteurs électromagnétiques caractérisé en ce que le champ magnétique appliqué à la masse de métal en fusion dans le creuset a une fréquence située dans un domaine compris entre $5.10^3$ Hz en borne inférieure et $5 \times 10^5$ Hz en borne supérieure de manière à assurer à la fois un brassage électromagnétique de la masse entière du métal liquide et une concentration en surface le long des parois froides de la masse à refondre de toutes les inclusions non conductrices constituées notamment des inclusions cécéramiques, obtenant ainsi une décantation inclusionnaire et en ce que les inclusions sont maintenues concentrées sur les parois froides de la masse à refondre jusqu'à l'évacuation du métal hors du creuset, les inclusions non-conductrices étant séparées de la masse métallique.

2. Procédé de refusion de superalliages à base de nickel selon la revendication 1 dans lequel le creuset froid utilisé est un creuset droit dans lequel le métal à refondre est introduit sous forme de lingot cylindrique dans la partie supérieure et le métal refondu affiné est tiré sous forme de lingot cylindrique dans la partie inférieure. de manière qu'une opération associée d'usinage de la surface du lingot permet d'éliminer les inclusions rassemblées en périphérie du lingot.

3. Procédé de refusion de superalliages à base de nickel selon la revendication 1 dans lequel le creuset froid utilisé est un creuset dit de lévitation dans lequel la majeure partie du métal liquide est maintenu en lévitation et le métal affiné est évacué par l'orifice du creuset de manière que les inclusions restent dans le creuset et sont piégées dans les parties froides de métal en contact avec les parois refroidies du creuset.

## Claims

1. Process of remelting nickel-based superalloys, the melting of the superalloys, placed in a cooled copper sectorized crucible called a cold crucible, being carried out, under a suitable vacuum, by means of electromagnetic inductors, characterized in that the magnetic field applied to the mass of molten metal in the crucible has a frequency which is in a range lying between $5 \times 10^3$ Hz at the lower limit and $5 \times 10^5$ Hz at the upper limit so as to ensure both electromagnetic stirring of the entire mass of liquid metal and surface concentration, along the cold walls of the mass to be remelted, of all the non-conducting inclusions consisting, especially, of ceramic inclusions, thus obtaining inclusion decantation, and in that the inclusions are kept concentrated on the cold walls of the mass to be remelted right up to the discharge of the metal from the crucible, the non-conducting inclusions being separated from the metallic mass.

2. Process of remelting nickel-based superalloys according to Claim 1, in which the cold crucible used is a straight crucible in which the metal to be remelted is introduced in the form of a cylindrical ingot into the upper part and the refined remelted metal is drawn off in the form of a cylindrical ingot in the lower part, so that an associated operation of machining the surface of the ingot makes it possible to remove the inclusions collected at the periphery of the ingot.

3. Process of remelting nickel-based superalloys according to Claim 1, in which the cold crucible used is a crucible called a levitation crucible in which the major part of the liquid metal is held in levitation and the refined metal is discharged via the orifice of the crucible so that the inclusions remain in the crucible and are trapped in the cold metal parts in contact with the cooled walls of the crucible.

**Patentansprüche**

1. Verfahren zum Umschmelzen von Superlegierungen auf Nickelbasis, wobei das Schmelzen von Superlegierungen, die in einem abgeteilten abgekühlten Kupfertiegel vorgesehen sind, der Kalttiegel genannt wird, in geeignetem Vakuum mittels elektromagnetischen Induktoren ausgeführt wird, dadurch **gekennzeichnet,** daß das die geschmolzene Metallmasse in dem Tiegel ausgeübte Magnetfeld eine Frequenz in einem Bereich zwischen $5 \times 10^3$ Hz als untere Grenze und $5 \times 10^5$ Hz als obere Grenze aufweist, so daß gleichzeitig ein elektromagnetisches Umrühren der gesamten flüssigen Metallmasse und an der Oberfläche längs der kalten Wände der umzuschmelzenden Masse eine Konzentration von allen nicht leitfähigen Einschlüssen gewährleistet wird, die insbesondere von keramischen Einschlüssen gebildet werden, wodurch ein Abscheiden von Einschlüssen erreicht wird, und daß die Einschlüsse konzentriert an den kalten Wänden der umzuschmelzenden Masse bis zum Herausnehmen des Metalls aus dem Tiegel gehalten werden, wobei die nicht-leitfähigen Einschlüsse von der metallischen Masse getrennt werden.

2. Verfahren zum Umschmelzen von Superlegierungen auf Nickelbasis, nach Anspruch 1, bei dem der verwendete Kalttiegel ein gerader Tiegel ist, in dem das umzuschmelzende Material in Form eines zylindrischen Blocks in den oberen Teil eingebracht wird und das verfeinerte, umgeschmolzene Metall in Form eines zylindrischen Blocks in den unteren Teil gezogen wird, so daß ein Vorgang im Zusammenhang mit einer Oberflächenbehandlung des Blocks die Beseitigung der in dem Randbereich des Blocks angesammelten Einschlüsse erlaubt.

3. Verfahren zum Umschmelzen von Superlegierungen auf Nickelbasis nach Anspruch 1, bei dem der verwendete Kalttiegel ein Levitationstiegel wird, bei dem der größere Anteil des flüssigen Metalls in Schwebe gehalten ist und das verfeinerte Metall so durch eine Tiegelöffnung abgelassen wird, daß die Einschlüsse in dem Tiegel verbleiben und in den kalten Abschnitten des Metalls in Berührung mit den abgekühlten Wänden des Tiegels gefangen sind.

FIG : 1

FIG : 2

FIG : 3

FIG:4a

FIG:4b

FIG:4c

FIG:4d

FIG:4e